# EUROPEAN PATENT SPECIFICATION

(11) **EP 2 988 051 B1**
(45) Date of publication and mention of the grant of the patent: **27.09.2017**
(21) Application number: 14189869.2
(22) Date of filing: 22.10.2014
(51) Int. Cl.: F16M 11/04, F16M 13/02, F16M 13/00, H04M 1/04

(54) **Multifunctional fixture apparatus and assembly thereof**
Multifunktionelle Befestigungsvorrichtung und Anordnung dafür
Appareil de fixation multifonction et son assemblage

(30) Priority: 04.08.2014 TW 103213810 U
(43) Date of publication of application: 24.02.2016
(73) Proprietor: Arcadyan Technology Corp., Hsinchu 300 (TW)
(72) Inventor: Wu, Chin-Yi, 302 Zhubei City, Hsinchu County (TW); Chen, Sheng-Chung, 310 Zhudong Township, Hsinchu County (TW)
(74) Representative: Viering, Jentschura & Partner mbB Patent- und Rechtsanwälte

(56) References cited:
- CN-U- 203 099 243
- US-A1- 2011 226 924
- US-A1- 2012 050 968
- US-A1- 2012 257 335
- US-A1- 2013 062 488

## Description

### BACKGROUND OF THE INVENTION

### 1. Field of the Invention

The present invention relates to a multifunctional fixture apparatus and assembly thereof; in particular, to a multifunctional fixture apparatus with various supporting modes for an electronic device and assembly thereof.

### 2. Description of Related Art

Several conventional ways have been provided to mount an electronic device onto a specific object. For example, an electronic device is disposed with a screw hole to be fastened onto the object. Further, the hole may be used to hang the device on a hook of the object. Still further, the electronic device may be disposed at a hanging shelf fixed on an object.

In a conventional technology, the electronic device may be disposed with a mounting element which allows the device to be fastened on an external fixture apparatus. This fixture apparatus is provided for fastening the electronic device to another object, for example a desk or a wall.

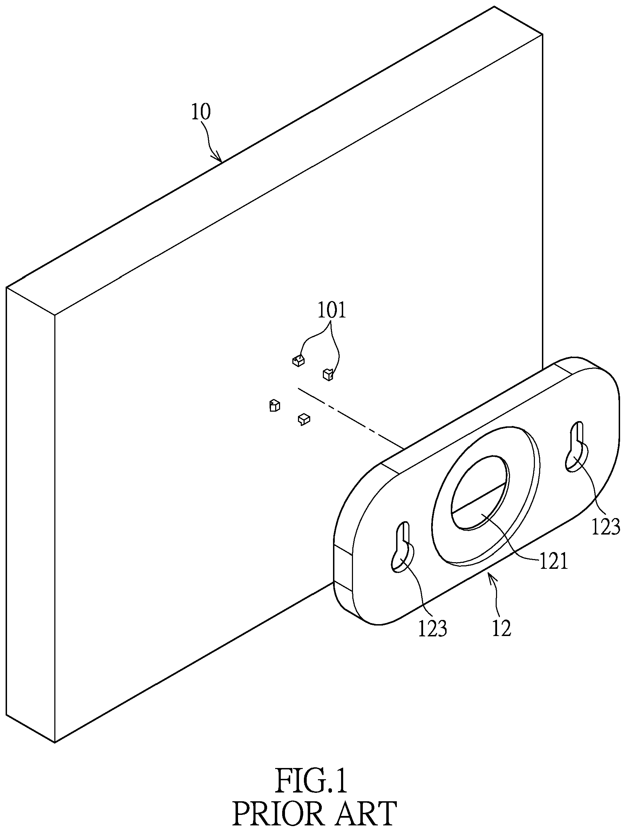

Reference is made to the fastening method shown in Fig. 1. A device 10 has a shell disposed with a fastening member 101 which is used to be fastened with a fixture apparatus 12. The fastening member 101 is corresponding to a fastening hole 121 of the fixture apparatus 12. This assembly allows the fixture apparatus 12 to be fastened onto a shell of the device 10. Then the screws or other fastening elements may be used to mount the fixture apparatus 12 onto an object via the hole 123. The object is such as a wall. For related technology refer to the wall-hanging fixture apparatus, published as R.O.C. Patent No. M396573 on 2011/01/11.

Other references relating to the fixture are such as a multifunctional fixture of CN203099243 that is capable of vertically or horizontally fixing a device; a detachable hanger and a supporting stand with the detachable hanger of US2013/062488; and an apparatus for attaching peripheral items to a device of US2012/050968.

US2011/226924 A1 discloses a multifunctional fixture apparatus and an assembly thereof according to the preamble of claim 1.

### SUMMARY OF THE INVENTION

The disclosure is related to a multifunctional fixture apparatus and an assembly thereof. The multifunctional fixture apparatus is provided for either fastening an electronic device onto a specific object, or disposing the electronic device onto a specific object. For example, the electronic device may be vertically positioned into a containing structure of the multifunctional fixture apparatus. According to the invention, the multifunctional fixture apparatus includes one or more surfaces and one or more suspended flexible connection members which are disposed on the one or more surfaces. A first end of the suspended flexible connection member is suspended. A second end of the connection member is connected to a surface of the multifunctional fixture apparatus. Each of the suspended flexible connection member allows the multifunctional fixture apparatus to be correspondingly locked to a chute structure of an electronic device a groove-shaped containing structure, used to be locked with the electronic device, wherein, compared with the one or more surfaces of the multifunctional fixture apparatus, the groove-shaped containing structure forms a concave portion of the multifunctional fixture apparatus; the concave portion is with a height, and two ends of the concave portion are opening ends. The groove-shaped containing structure and the one or more suspended flexible connection members are disposed over the same surface or opposite one or more surfaces; and the groove-shaped containing structure has a height drop from the surface.

Preferably, the suspended flexible connection member is such as one or more curved locking plates disposed on the surface of the multifunctional fixture apparatus. The curved locking plate is rotatably inserted and locked with the chute structure of the electronic device. Furthermore, the suspended flexible connection member may also be one or more elongated locking plates disposed on the surface of the multifunctional fixture apparatus. The elongated locking plates may be slidably inserted into the chute structure of the electronic device.

Preferably, the suspended flexible connection member is associated with the surface of the multifunctional fixture apparatus via a connection member, and a gap exists apart from the surface.

The groove-shaped containing structure and the one or more suspended flexible connection members can be disposed over different surfaces.

The suspended flexible connection member preferably includes one or more convex ribs disposed at one or more positions for latching the chute structure of the electronic device.

The multifunctional fixture apparatus can further comprise one or more wall-hanging structures for the groove-shaped containing structure to be locked with a wall.

The groove-shaped containing structure can be disposed with one or more latches for latching the electronic device.

The groove-shaped containing structure is a U-shaped structure for installing the electronic device, and the one or more latches are disposed at one or more lateral walls of the U-shaped structure.

The assembly for a multifunctional fixture apparatus can further comprise a fastening member disposed on a shell of an electronic device, and the fastening member being disposed with at least one chute structure.

The suspended flexible connection member can be a curved locking plate disposed on the surface of the multifunctional fixture apparatus, and the curved locking plate is rotatably inserted and locked with the chute structure of the electronic device.

The suspended flexible connection member preferably is an elongated locking plate disposed on the surface of the multifunctional fixture apparatus, and the elongated locking plate is slidably inserted and locked with the chute structure of the electronic device.

Preferably the groove-shaped containing structure and the one or more suspended flexible connection members are disposed over different surfaces.

The groove-shaped containing structure is preferably disposed with one or more latches for latching the electronic device, and the one or more latches are disposed at one or more lateral walls of the U-shaped groove-shaped containing structure.

The electronic device preferably has a first side having thermal dissipation grooves, and the multifunctional fixture apparatus is locked with the thermal dissipation groove via the one or more latches.

### BRIEF DESCRIPTION OF THE DRAWINGS

Fig. 1 schematically shows a conventional fixture apparatus;
Fig. 2 shows a multifunctional fixture apparatus in one embodiment of the present invention;
Fig. 3 shows another multifunctional fixture apparatus in one other embodiment of the present invention;
Fig. 4 shows a schematic diagram depicting the electronic device which is associated with the multifunctional fixture apparatus of the present invention;
Fig. 5 shows a schematic diagram depicting the electronic device fastened with the multifunctional fixture apparatus in one embodiment of the present invention;
Fig. 6 schematically shows the multifunctional fixture apparatus in one further embodiment of the present invention;
Fig. 7 shows a schematic diagram describing an assembly with the multifunctional fixture apparatus in one embodiment of the present invention;
Fig. 8 shows another schematic diagram describing the assembly with the multifunctional fixture apparatus in one embodiment of the present invention;
Fig. 9 schematically shows the multifunctional fixture apparatus in one embodiment of the present invention;
Fig. 10 schematically shows the multifunctional fixture apparatus in one further embodiment of the present invention.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

Disclosure in the application is related to a multifunctional fixture apparatus and an assembly thereof. The multifunctional fixture apparatus is provided to fasten or support one electronic device with at least two schemes. The multifunctional fixture apparatus is an external device to the electronic device. The assembly with the electronic device or any assembly meeting a need may be fastened to a specific object with the multifunctional fixture apparatus.

According to one embodiment in the disclosure, the multifunctional fixture apparatus may be fastened with a chute structure on a shell of the electronic device with a rotatable angle. Alternatively, the multifunctional fixture apparatus may be fastened with the chute structure of electronic device or the like using a sliding mechanism. In one further operating mode, the electronic device or any applicable device may be directly installed into a groove-shaped containing structure of the multifunctional fixture apparatus. The groove-shaped containing structure forms a concave portion of the multifunctional fixture apparatus. The concave portion is with a drop height for stably placing a device.

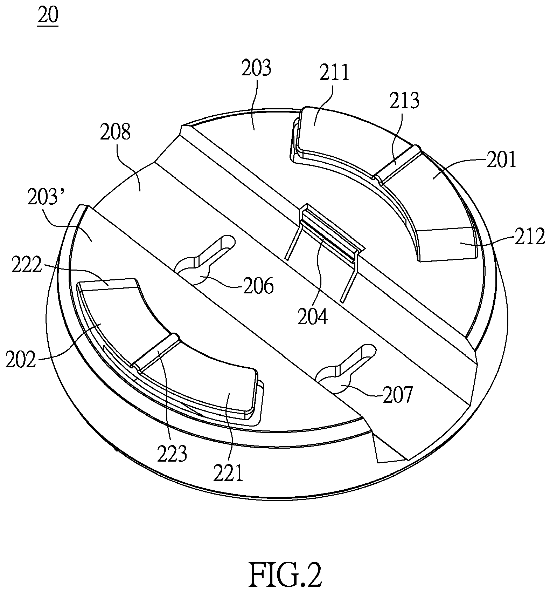

Reference is made to Fig. 2 depicting a multifunctional fixture apparatus in one embodiment. A multifunctional fixture apparatus 20 is shown, and is, but is not limited to, implemented by a round-shaped device. Other shapes designed for the multifunctional fixture apparatus 20 may be adopted, e.g. triangular, square, rhombus, rectangular, trapezoid, or other polygonal shapes.

In the diagram, the multifunctional fixture apparatus 20 has a concave portion formed in a middle part or near the middle part. Relative to surface (203, 203') forming the suspended flexible connection members 201, 202, the concave portion is such as a U-shaped structure with a height drop. It is noted that the connection member is exemplarily a flaky like structure. In practice, the U-shaped structure does not exclude other shapes such as a V-shaped structure. The concave portion forms a groove-shaped containing structure 208 of the multifunctional fixture apparatus 20 since it is with a height. Two ends of the groove-shaped containing structure 208 form two opening ends. The electronic device can be installed into the groove-shaped containing structure 208. The groove-shaped containing structure 208 is disposed with one or more latches 204 for latching the electronic device. The latches 204 are used to latch the recesses on the shell of electronic device.

The positions of the latches 204 are preferably formed over the lateral wall around the groove-shaped containing structure 208, namely the lateral wall around the U-shaped structure. The number of latches 204 may not be limited. An adequate number of latches 204 is required to latch the recesses of the electronic device.

Relative to the concave portion of the groove-shaped containing structure 208, the non-concave portion, e.g. the surfaces 203, 203', of the multifunctional fixture apparatus 20 is disposed with one or more suspended flexible connection members 201, 202. The number or positions disposing the suspended flexible connection members 201, 202 are in accordance with the requirement for stably fixing the electronic device or the like.

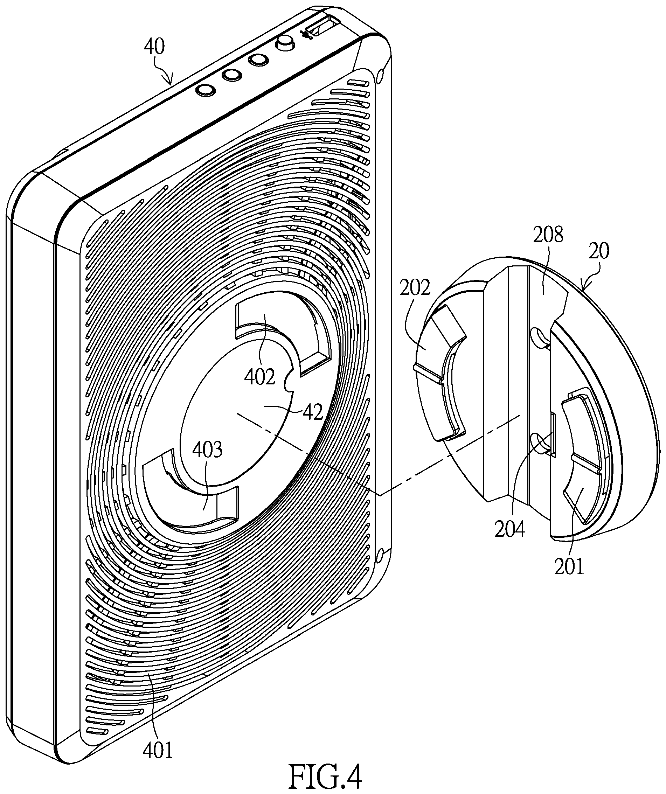

The suspended flexible connection member 201 or 202 is exemplarily a curved locking plate disposed upon the surface 203 or 203' of the multifunctional fixture apparatus 20. The suspended flexible connection members 201, 202 respectively render two first ends 211, 221 which are suspended and flexible, and two second ends 212, 222 which are the connection members for connecting with the surfaces 203, 203' of the multifunctional fixture apparatus 20. In an exemplary example, the suspended flexible connection members 201, 202 and the multifunctional fixture apparatus 20 may be formed in one-piece manufacturing method. Furthermore, a gap exists between the suspended flexible connection members 201, 202 and the multifunctional fixture apparatus 20 while each suspended flexible connection member 201 or 202 is associated with the surface 203 or 203' of the multifunctional fixture apparatus 20 via the connection member. It is noted that the gap with a required height exists apart from the surface 203 or 203'. This kind of locking plate allows the multifunctional fixture apparatus 20 to rotatably lock the chute structure of the device through these suspended flexible connection members 201, 202. For reference refer to the embodiment described in Fig. 4.

According to an embodiment of the present invention, one or more convex ribs 213, 223 may be formed over the suspended flexible connection members 201, 202. The number and positions of the convex ribs 213, 223 are in accordance with the practical requirement. The one or more convex ribs 213, 223 are provided to latching the chute structure of the electronic device. The connection mechanism provides solid connection between the electronic device and the multifunctional fixture apparatus 20.

In one further embodiment, the electronic device may be fastened onto an object by this multifunctional fixture apparatus 20. The concave portion of the groove-shaped containing structure 208 may also be disposed with one or more wall-hanging structures 206, 207. These wall-hanging structures 206, 207 are such as gourd-shaped holes allowing the multifunctional fixture apparatus 20 to be locked with a wall.

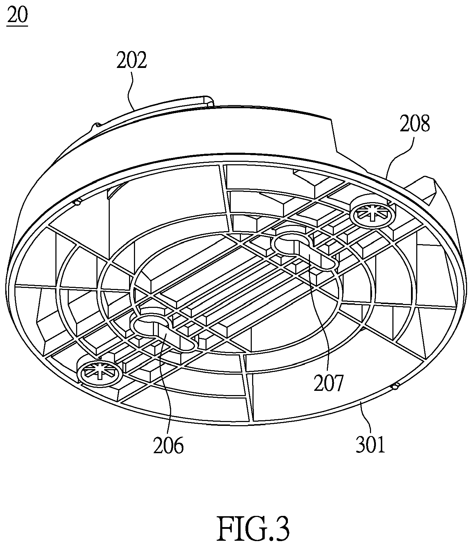

Referring to Fig. 3 showing a bottom view of the multifunctional fixture apparatus, several perforating wall-hanging structures 206, 207 are formed over the bottom surface 301 of the multifunctional fixture apparatus 20. The perforating structures allow the electronic device with the multifunctional fixture apparatus 20 to be fastened with an object through the wall-hanging structure 206, 207 using screws or other kinds of wall-hanging elements.

For an electronic device that has the structure corresponding to the multifunctional fixture apparatus, reference is made to Fig. 4. An electronic device 40 is shown. In practice, the fixture apparatus is not only provided for fastening to an electronic device, but also used to fasten any device or things onto an object.

In an exemplary embodiment, a fastening member 42 formed on shell of the electronic device 40 is configured to be the structure corresponding to the multifunctional fixture apparatus 20. The fastening member 42 corresponds to the configuration of the multifunctional fixture apparatus 20, for example the chute structures 402, 403 and the suspended flexible connection members. The number and positions of the chute structures 402, 403 are also corresponding to the number and positions of the suspended flexible connection members of the fixture apparatus 20. The suspended flexible connection members allow the chute structures 402, 403 of the electronic device to be rotatably or slidably locked with the fixture apparatus 20.

The shown electronic device has a shell with thermal dissipation grooves 401. The thermal dissipation groove 401 allows the electronic device to be latched with the latches of the multifunctional fixture apparatus 20 while the electronic device is positioned into the groove-shaped containing structure. The latches 204 of the multifunctional fixture apparatus 20 may latch the recesses of a shell of the electronic device according to one of the embodiments.

The pair of chute structures of the fastening member 42 of the electronic device is correspondingly connected with the suspended flexible connection members, e.g. the members 201, 202 of Fig. 2. Each chute structure 402 or 403 has a chute entrance and a blocking structure of the chute end. This means the first end of the suspended flexible connection member(s) of the multifunctional fixture apparatus is rotatably or slidably inserted into the chute structure(s) 402 or 403 of the fastening member 42. The above-mentioned convex ribs of the suspended flexible connection member are provided to stabilize the connection there-between. The suspended flexible connection member(s) may stop at the blocking structure.

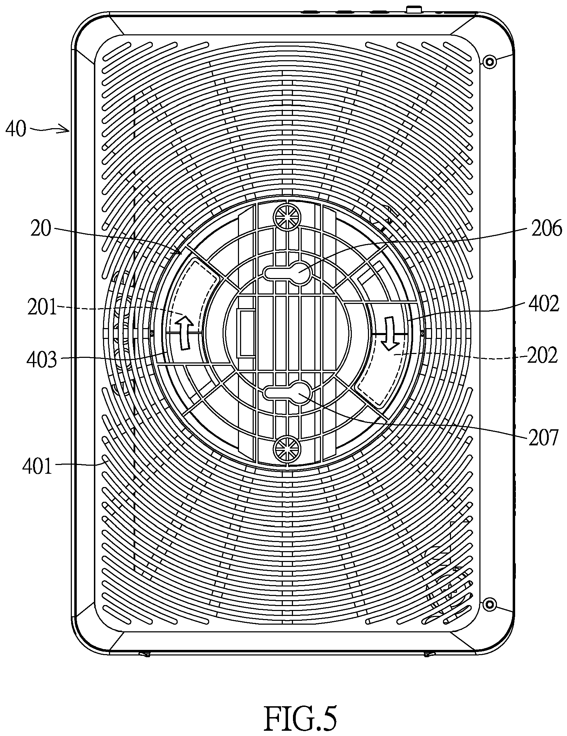

For the combination of the multifunctional fixture apparatus and the electronic device refer to the schematic diagram of Fig. 5. The electronic device 40 is locked with the multifunctional fixture apparatus 20. The suspended flexible connection members 201, 202 of the multifunctional fixture apparatus 20 are provided to fasten the electronic device 40 through the fastening member, including the chute structure 402 or 403. By the wall-hanging structures 206, 207 of the multifunctional fixture apparatus 20, the electronic device 40 is fastened onto an object.

For example, the electronic device 40 has thermal dissipation grooves 401. In one operating mode, the electronic device is positioned into the multifunctional fixture apparatus 20, and the thermal dissipation grooves 401 are latched with the latches of the multifunctional fixture apparatus 20.

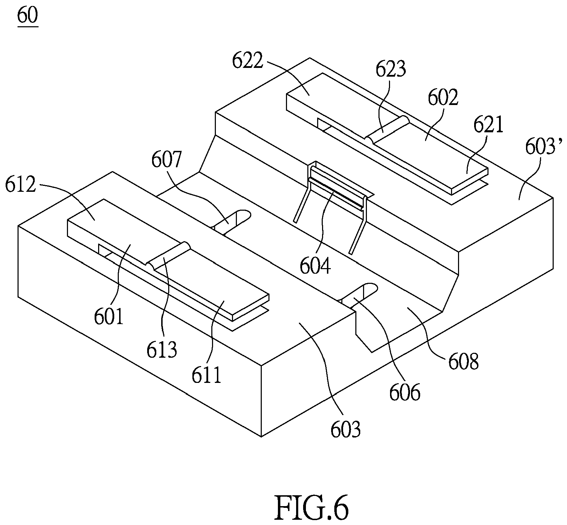

Reference is made to Fig. 6 depicting the multifunctional fixture apparatus in one embodiment. The multifunctional fixture apparatus 60 may be a non-round type of fixture apparatus. For example, the electronic device may be slidably inserted to the multifunctional fixture apparatus.

In the diagram, the multifunctional fixture apparatus 60 has a concave portion formed in the middle or near the middle portion. The concave portion forms the groove-shaped containing structure 608 of the multifunctional fixture apparatus 60. The groove-shaped containing structure 608 is exemplarily a U-shaped structure with a height and two opening ends. Further, the groove-shaped containing structure 608 may contain various sizes of electronic devices. However the thickness of the device may be restricted. The groove-shaped containing structure 608 is disposed with one or more latches 604 for latching the recesses of the electronic device. The recesses on the shell of the electronic device are such as the thermal dissipation grooves or other recesses formed on the shell. The number or positions of the latches 604 may be in accordance with the practical requirement.

Relative to the concave structure of the groove-shaped containing structure 608, the surfaces 603, 603' of the multifunctional fixture apparatus 60 are formed with one or more elongated suspended flexible connection members 601, 602. The number and positions of the suspended flexible connection members 601, 602 are also in consideration of the practical requirement of latching the electronic device or the like.

The suspended flexible connection member 601 or 602 in accordance with the present embodiment is such as an elongated locking plate formed on the surface 603 or 603' of the multifunctional fixture apparatus 60. The first ends 611, 621 of the suspended flexible connection members 601, 602 are configured to be suspended and flexible. The second ends 612, 622 of the suspended flexible connection members 601, 602 are used to respectively connect with the surfaces 603, 603' of the multifunctional fixture apparatus 60. The suspended flexible connection members 601, 602 and the body of multifunctional fixture apparatus 60 may be manufactured in one-piece method. Similar to the embodiment shown in Fig. 2, the only difference for the present embodiment is the connection and latching mechanism provided by the suspended flexible connection members 601, 602, which are slidably into the chute structures of the fastening member of the electronic device.

Similarly, as shown in the diagram, each suspended flexible connection member 601 or 602 may be formed with one or more convex ribs 613, 623, whose number and position may be designed as requires. The suspended flexible connection member (601, 602) includes one or more convex ribs 613, 623 disposed at one or more positions for latching the chute structure of the electronic device. The ribs 613, 623 may stabilize the connection between the electronic device and the multifunctional fixture apparatus 60. The groove-shaped containing structure 608 forming a concave portion of the multifunctional fixture apparatus 60 may be disposed with one or more wall-hanging structures 606, 607.

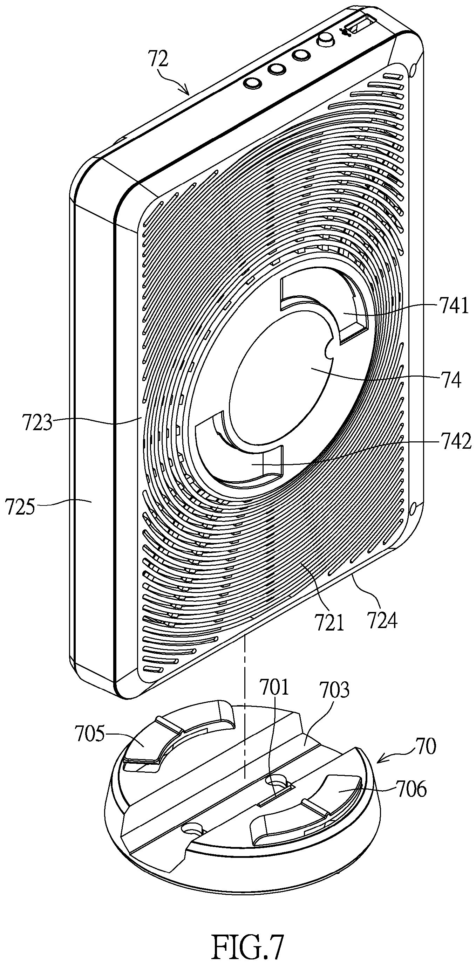

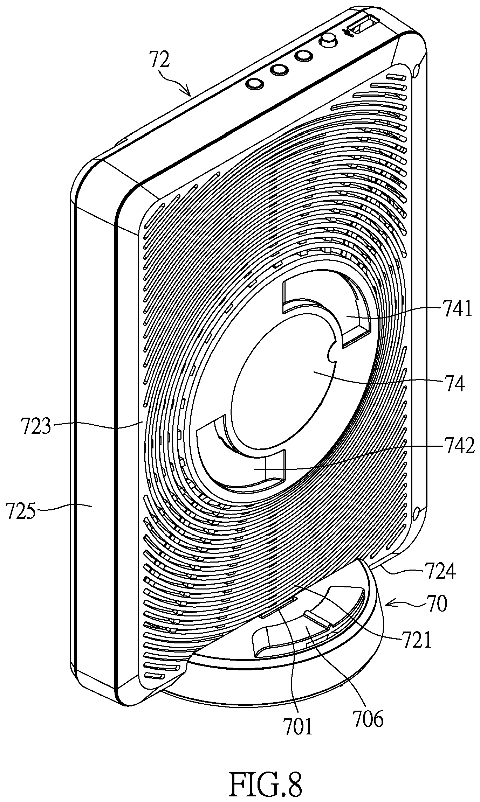

For the disposal of the electronic device and the multifunctional fixture apparatus refer to the schematic diagrams shown in Fig. 7 and in Fig. 8.

In Fig. 7, it shows the electronic device 72 with thermal dissipation grooves 721 is picked up from a multifunctional fixture apparatus 70. Fig. 8 shows the electronic device 72 is placed into the containing structure of the multifunctional fixture apparatus 70. The thermal dissipation grooves 721 allow the electronic device 72 to be latched with the latches 701 of the multifunctional fixture apparatus 70.

In practice, a first side 723 of the electronic device 72 is disposed with a fastening member 74 with at least one chute structure (741, 742). The chute structures 741, 742 are used to connect with the suspended flexible connection members 705, 706 of the multifunctional fixture apparatus 70. In one operating mode to fasten the electronic device 72 with the multifunctional fixture apparatus 70, the electronic device 72 may be placed in a flat manner since the multifunctional fixture apparatus 70 can be fixed to a wall, an object, and any plane.

In one further operating mode, the electronic device 72 may be inserted to the groove-shaped containing structure 703 of the fixture apparatus 70 using a second side 724, and a latch 701 may lock the thermal dissipation groove 721.

The shown electronic device 72 has a cuboid body. Its first side 723 and second side 724 are adjacent and non-coplanar. The first side 723 of the electronic device 40 is adjacent to a third side 725, e.g. a left side of the present embodiment. The third side 725 and the first side 723 are adjacent and non-coplanar. The electronic device 72 may also be inserted to the groove-shaped containing structure 703 of the multifunctional fixture apparatus 70 along its third side 725. The latch 701 may also be used to latch the thermal dissipation groove 721 of the electronic device 72 to the thermal dissipation groove 721. Namely, the first side 723, the second side 724, and the third side 725 are configured to be adjacent structures, by which or its equivalent structure the electronic device 72 is combined with the multifunctional fixture apparatus 70.

The suspended flexible connection members 705, 706 of the multifunctional fixture apparatus 70 are disposed on a first surface (surfaces 603, 603' of Fig. 6) of the multifunctional fixture apparatus 70. The suspended flexible connection members 705, 706 are disposed on two sides of the groove-shaped containing structure 703. The groove-shaped containing structure 703 has a height drop from the surface having the suspended flexible connection members 705, 706.

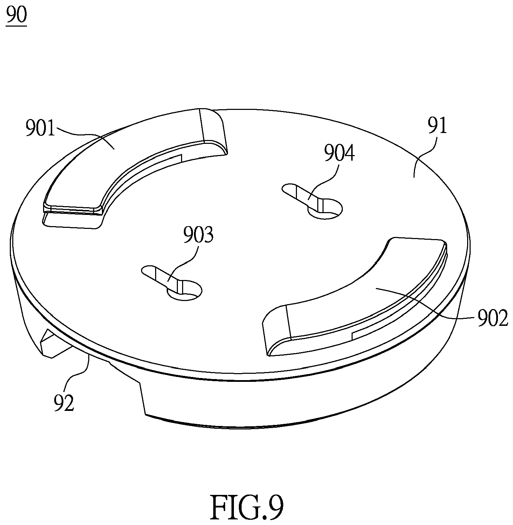

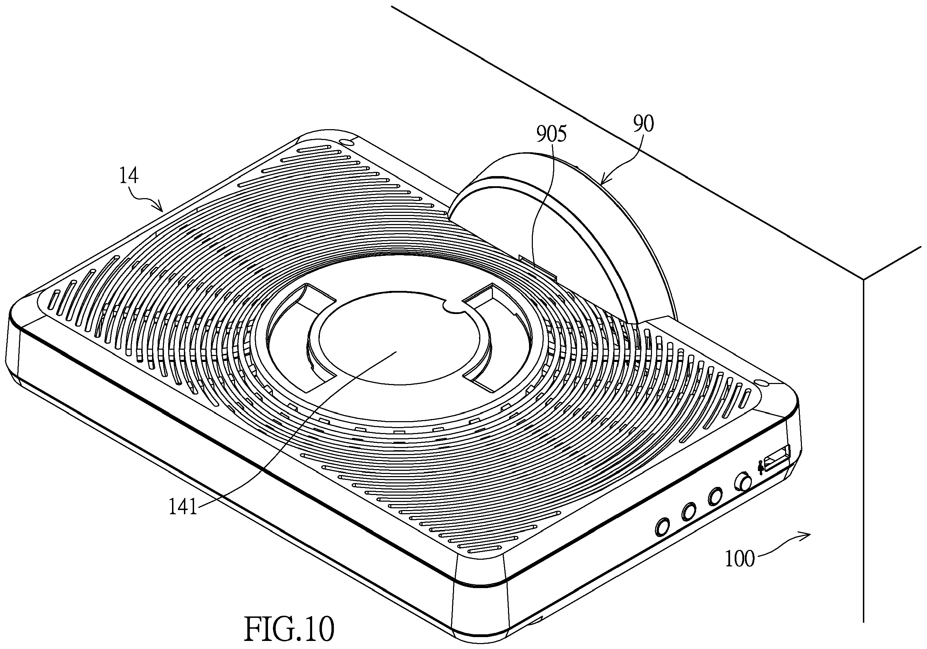

Fig. 9 and Fig. 10 schematically show the electronic device latched with the multifunctional fixture apparatus in one further embodiment. A surface 91 of the multifunctional fixture apparatus 90 is defined as a first surface of the fixture apparatus. One or more suspended flexible connection members 901, 902 and one or more wall-hanging structures 903, 904 may be disposed on the surface 91. However, the groove-shaped containing structure 92 is formed on the other surface rather than the surface 91. In the diagram, the opening of the groove-shaped containing structure 92 is downward, and defined as a second surface of the multifunctional fixture apparatus 90. The second surface and the first surface may be structurally parallel.

When the multifunctional fixture apparatus 90 is placed on a plane, the surface is upward and the second surface is downward. The fastening member 141 of the electronic device 14 shown in Fig. 10 is used to connect with the one or more suspended flexible connection members 901, 902 of the multifunctional fixture apparatus 90. In one further operating mode, the first surface of the multifunctional fixture apparatus 90 is downward, and the second surface having the groove-shaped containing structures 92 is upward. The electronic device is allowed to connect to the groove-shaped containing structure 92. Under this operating mode, the suspended flexible connection members 901, 902 are toward to the surface of electronic device. Since the two suspended flexible connection members 901, 902 may be symmetrically arranged, or more than two suspended flexible connection members can be evenly arranged over the surface 91, the multifunctional fixture apparatus 90 may be stably fixed on a plane.

In Fig. 10, the multifunctional fixture apparatus 90 is firstly fixed on a wall 100 using one or more wall-hanging structures 903, 904. The electronic device 14, with its one lateral side, may be combined with the groove-shaped containing structure 92 of the multifunctional fixture apparatus 90. The latch 905 may assist in stabilizing the electronic device 14.

Thus, the disclosure is related to a multifunctional fixture apparatus which renders at least two methods to fasten the electronic device. The multifunctional fixture apparatus primarily incorporates at least one suspended flexible connection member to latch the chute structure of electronic device. This mechanism allows fixing the device to an object, for example, by a wall-hanging structure. In one other mode, the electronic device is able to be placed into the groove-shaped containing structure of the multifunctional fixture apparatus.

It is intended that the specification and depicted embodiment be considered exemplary only, with a true scope of the invention being determined by the broad meaning of the following claims.

## Claims

1. A multifunctional fixture apparatus (20, 90), comprising:
one or more surfaces (203, 203', 91);
one or more suspended flexible connection members (201, 202, 901, 902) which are disposed on the one or more surfaces (203, 203', 91), in which a first end of the suspended flexible connection member (201, 202, 901, 902) is suspended, a second end thereof is connected to a surface (203, 203', 91) of the multifunctional fixture apparatus (20, 90); and each of the suspended flexible connection member (201, 202, 901, 902) allows the multifunctional fixture apparatus (20, 90) to be correspondingly locked to a chute structure (402, 403) of an electronic device; and
a groove-shaped containing structure (208, 92), used to be locked with the electronic device, wherein, compared with the one or more surfaces (203, 203', 91) of the multifunctional fixture apparatus (20, 90), the groove-shaped containing structure (208, 92) forms a concave portion of the multifunctional fixture apparatus (20, 90); the concave portion is with a height, and two ends of the concave portion are opening ends; **characterized in that**:
the groove-shaped containing structure (208, 92) and the one or more suspended flexible connection members (201, 202, 901, 902) are disposed over the same surface (203, 203') or opposite one or more surfaces (91); and the groove-shaped containing structure (208, 92) has a height drop from the surface (203, 203', 91).

2. The multifunctional fixture apparatus (20, 90) according to claim 1, wherein the suspended flexible connection member (201, 202, 901, 902) is a curved locking plate disposed on the surface of the multifunctional fixture apparatus (20, 90), and the curved locking plate is rotatably inserted and locked with the chute structure (402, 403) of the electronic device.

3. The multifunctional fixture apparatus (20, 90) according to claim 1, wherein the suspended flexible connection member (201, 202, 901, 902) is an elongated locking plate disposed on the surface of the multifunctional fixture apparatus (20, 90), and the elongated locking plate is slidably inserted and locked with the chute structure (402, 403) of the electronic device.

4. The multifunctional fixture apparatus (20, 90) according to claim 2 or claim 3, wherein the suspended flexible connection member (201, 202, 901, 902) is associated with the surface (203, 203', 91) of the multifunctional fixture apparatus (20, 90) via a connection member, and a gap exists apart from the surface (203, 203', 91).

5. The multifunctional fixture apparatus (20) according to claim 4, wherein the suspended flexible connection member (201, 202) includes one or more convex ribs (213, 223) disposed at one or more positions for latching the chute structure (402, 403) of the electronic device.

6. The multifunctional fixture apparatus (20, 90) according to claim 4, further comprising one or more wall-hanging structures (206, 207, 903, 904) for the groove-shaped containing structure (208, 92) to be locked with a wall.

7. The multifunctional fixture apparatus (20, 90) according to claim 1, wherein the groove-shaped containing structure (208, 92) is disposed with one or more latches (204, 905) for latching the electronic device.

8. The multifunctional fixture apparatus (20, 90) according to claim 7, wherein the groove-shaped containing structure (208, 92) is a U-shaped structure for installing the electronic device, and the one or more latches (204, 905) are disposed at one or more lateral walls of the U-shaped structure.

9. An assembly comprising a multifunctional
fixture apparatus (20,90) according to claim 1 and
a fastening member (42) disposed on a shell of an electronic device, and the fastening member (42) being disposed with at least one chute structure (402, 403).

10. The assembly according to claim 9, wherein the suspended flexible connection member (201, 202, 901, 902) is a curved locking plate disposed on the surface of the multifunctional fixture apparatus (20, 90), and the curved locking plate is rotatably inserted and locked with the chute structure (402, 403) of the electronic device.

11. The assembly according to claim 9, wherein the suspended flexible connection member (201, 202, 901, 902) is an elongated locking plate disposed on the surface of the multifunctional fixture apparatus (20, 90), and the elongated locking plate is slidably inserted and locked with the chute structure (402, 403) of the electronic device.

12. The assembly according to claim 9, wherein the groove-shaped containing structure (208, 92) is disposed with one or more latches (204, 905) for latching the electronic device, and the one or more latches (204, 905) are disposed at one or more lateral walls of the U-shaped groove-shaped containing structure (208, 92).

13. The assembly according to claim 12, wherein the electronic device has a first side having thermal dissipation grooves (401), and the multifunctional fixture apparatus (20, 90) is locked with the thermal dissipation groove (401) via the one or more latches (204, 905).

## Patentansprüche

1. Multifunktionsbefestigungsvorrichtung (20, 90), umfassend:
eine oder mehrere Oberflächen (203, 203', 91),
eines oder mehrere gefederte flexible Verbindungselemente (201, 202, 901, 902), die auf der einen oder mehreren Oberfläche (203, 203', 91) angeordnet sind, an der ein erstes Ende des gefederten flexiblen Verbindungselements (201, 202, 901, 902) aufgehängt ist, ein zweites Ende davon mit einer Oberfläche (203, 203', 91) der Multifunktionsbefestigungsvorrichtung (20, 90) verbunden ist und jedes der gefederten flexiblen Verbindungselemente (201, 202, 901, 902) es ermöglicht, dass die Multifunktionsbefestigungsvorrichtung (20, 90) mit einer entsprechenden Rinnenstruktur (402, 403) eines elektronischen Geräts verriegelt wird, und
eine rinnenförmige Aufnahmestruktur (208, 92), die verwendet wird mit dem elektronischen Gerät verriegelt zu sein, wobei im Vergleich mit der einen oder mehreren Oberflächen (203, 203', 91) der Multifunktionsbefestigungsvorrichtung (20, 90) die rinnenförmige Aufnahmestruktur (208, 92) einen konkaven Abschnitt der Multifunktionsbefestigungsvorrichtung (20, 90) ausbildet, der konkave Abschnitt mit einer Höhe ausgebildet ist und zwei Enden des konkaven Abschnitts sind Öffnungsenden sind, **dadurch gekennzeichnet, dass**:
die rinnenförmige Aufnahmestruktur (208, 92) und das eine oder mehrere gefederte flexible Verbindungselement (201, 202, 901, 902) über der gleichen Oberfläche (203, 203 ') oder gegenüberliegend auf einer oder mehreren Oberflächen (91) angeordnet sind, und die rinnenförmige Aufnahmestruktur (208, 92) einen Höhenabfall von der Oberfläche (203, 203', 91) aufweist.

2. Multifunktionsbefestigungsvorrichtung (20, 90) nach Anspruch 1, wobei das gefederte flexible Verbindungselement (201, 202, 901, 902) eine gekrümmte Verriegelungsplatte ist, die auf der Oberfläche der Multifunktionsbefestigungsvorrichtung (20, 90) angeordnet ist und die gekrümmte Verriegelungsplatte in die Rinnenstruktur (402, 403) des elektronischen Geräts drehbar eingesetzt und verriegelt ist.

3. Multifunktionsbefestigungsvorrichtung (20, 90) nach Anspruch 1, wobei das gefederte flexible Verbindungselement (201, 202, 901, 902) eine längliche Verriegelungsplatte ist, die auf der Oberfläche der Multifunktionsbefestigungsvorrichtung (20, 90) angeordnet ist, und die längliche Verriegelungsplatte in die Rinnenstruktur (402, 403) des elektronischen Geräts verschiebbar eingesetzt und verriegelt ist.

4. Multifunktionsbefestigungsvorrichtung (20, 90) nach Anspruch 2 oder 3, wobei das gefederten flexible Verbindungselement (201, 202, 901, 902) der Oberfläche (203, 203', 91) der Multifunktionsbefestigungsvorrichtung (20, 90) über ein Verbindungselement zugeordnet ist und eine Lücke getrennt von der Oberfläche (203, 203', 91) ausgebildet ist.

5. Multifunktionsbefestigungsvorrichtung (20) nach Anspruch 4, wobei das gefederte flexible Verbindungselement (201, 202) eine oder mehrere konvexe Rippen (213, 223) aufweist, die an einer oder mehreren Positionen zum Verriegeln der Rinnenstruktur (402, 403) des elektronischen Geräts angeordnet sind.

6. Multifunktionsbefestigungsvorrichtung (20, 90) nach Anspruch 4, ferner umfassend eine oder mehrere Wandaufhängestrukturen (206, 207, 903, 904) für die mit der Wand zu verriegelnde rinnenförmige Aufnahmestruktur (208, 92).

7. Multifunktionsbefestigungsvorrichtung (20, 90) nach Anspruch 1, wobei die rinnenförmige Aufnahmestruktur (208, 92) mit einem oder mehreren Riegeln (204, 905) zum Verriegeln der elektronischen Geräts ausgebildet ist.

8. Multifunktionsbefestigungsvorrichtung (20, 90) nach Anspruch 7, wobei die rinnenförmige Aufnahmestruktur (208, 92) eine U-förmige Struktur zum Montieren des elektronischen Geräts ist und der eine oder mehrere Riegel (204, 905) an einer oder mehreren Seitenwänden der U-förmigen Struktur angeordnet ist.

9. Anordnung umfassend eine Multifunktionsbefestigungsvorrichtung (20, 90) nach Anspruch 1 und
ein Befestigungselement (42), das auf einer Schale eines elektronischen Geräts angeordnet ist und das Befestigungselement (42) mit zumindest einer Rinnenstruktur (402, 403) ausgebildet ist.

10. Anordnung nach Anspruch 9, wobei das gefederte flexible Verbindungselement (201, 202, 901, 902) eine gekrümmte Verriegelungsplatte ist, die auf der Oberfläche der Multifunktionsbefestigungsvorrichtung (20, 90) angeordnet ist und die gekrümmte Verriegelungsplatte mit der Rinnenstruktur (402, 403) des elektronischen Geräts drehbar eingesetzt und verriegelt ist.

11. Anordnung nach Anspruch 9, wobei das gefederten flexible Verbindungselement (201, 202, 901, 902) eine längliche Verriegelungsplatte ist, die auf der Oberfläche der Multifunktionsbefestigungsvorrichtung (20, 90) angeordnet ist und die längliche Verriegelungsplatte mit der Rinnenstruktur (402, 403) des elektronischen Geräts verschiebbar eingesetzt und verriegelt ist.

12. Anordnung nach Anspruch 9, wobei die rinnenförmige Aufnahmestruktur (208, 92) mit einem oder mehreren Riegeln (204, 905) zum Verriegeln des elektronischen Geräts ausgebildet ist und der eine oder mehrere Riegel (204, 905) an einer oder mehreren Seitenwänden der U-förmigen rinnenförmige Aufnahmestruktur (208, 92) angeordnet ist.

13. Anordnung nach Anspruch 12, wobei das elektronische Gerät eine erste Seite mit Wärmedissipationsrillen (401) aufweist und die Multifunktionsbefestigungsvorrichtung (20, 90) mit der Wärmedissipationsnut (401) über den einen oder mehrere Riegeln (204, 905) verriegelt ist.

## Revendications

1. Appareil de fixation multifonction (20, 90) comprenant :
une ou plusieurs surfaces (203, 203', 91) ;
un ou plusieurs éléments de liaison flexibles suspendus (201, 202, 901, 902) qui sont disposés sur la ou les surfaces (203, 203', 91), dans lequel une première extrémité de l'élément de liaison flexible suspendu (201, 202, 901, 902) est suspendue, une seconde extrémité de celui-ci est reliée à une surface (203, 203', 91) de l'appareil de fixation multifonctionnel (20, 90) ; et chacun des éléments de liaison flexibles suspendus (201, 202, 901, 902) permet à l'appareil de fixation multifonction (20, 90) d'être verrouillé en correspondance sur une structure de goulotte (402, 403) d'un dispositif électronique ; et
une structure de confinement en forme de gorge (208, 92), utilisée pour être verrouillée avec le dispositif électronique, dans laquelle, par rapport à la ou aux surfaces (203, 203', 91) de l'appareil de fixation multifonction (20, 90), la structure de confinement en forme de gorge (208, 92) forme une partie concave de l'appareil de fixation multifonction (20, 90) ; la partie concave présente une hauteur, et deux extrémités de la partie concave sont des extrémités d'ouverture ; **caractérisé en ce que** :
la structure de confinement en forme de gorge (208, 92) et l'élément ou les éléments de liaison flexibles suspendus (201, 202, 901, 902) sont disposés sur la même surface (203, 203') ou une ou plusieurs surfaces opposées (91), et la structure de confinement en forme de gorge (208, 92) présente une chute de hauteur par rapport à la surface (203, 203', 91).

2. Appareil de fixation multifonction (20, 90) selon la revendication 1, dans lequel l'élément de liaison flexible suspendu (201, 202, 901, 902) est une plaque de verrouillage incurvée disposée sur la surface de l'appareil de fixation multifonction (20, 90), et la plaque de verrouillage incurvée est insérée de manière rotative et verrouillée à la structure de goulotte (402, 403) du dispositif électronique.

3. Appareil de fixation multifonction (20, 90) selon la revendication 1, dans lequel l'élément de liaison flexible suspendu (201, 202, 901, 902) est une plaque de verrouillage allongée disposée sur la surface de l'appareil de fixation multifonction (20, 90), et la plaque de verrouillage allongée est insérée de manière coulissante et verrouillée avec la structure de goulotte (402, 403) du dispositif électronique.

4. Appareil de fixation multifonction (20, 90) selon la revendication 2 ou la revendication 3, dans lequel l'élément de liaison flexible suspendu (201, 202, 901, 902) est associé à la surface (203, 203', 91) de l'appareil de fixation multifonction (20, 90) via un élément de liaison, et un espace existe par rapport à la surface (203, 203', 91).

5. Appareil de fixation multifonctionnel (20) selon la revendication 4, dans lequel l'élément de liaison flexible suspendu (201, 202) comporte une ou plusieurs nervures convexes (213, 223) disposées à une ou plusieurs positions pour le verrouillage de la structure de goulotte (402, 403) du dispositif électronique.

6. Appareil de fixation multifonction (20, 90) selon la revendication 4, comprenant en outre une ou plusieurs structures de suspension murale (206, 207, 903, 904) pour que la structure de confinement en forme de gorge (208, 92) soit verrouillée à une paroi.

7. Appareil de fixation multifonction (20, 90) selon la revendication 1, dans lequel la structure de confinement en forme de gorge (208, 92) est pourvue d'un ou plusieurs verrous (204, 905) pour verrouiller le dispositif électronique.

8. Appareil de fixation multifonction (20, 90) selon la revendication 7, dans lequel la structure de confinement en forme de gorge (208, 92) est une structure en U pour installer le dispositif électronique, et le ou les verrous (204, 905) sont disposés au niveau d'une ou plusieurs parois latérales de la structure en U.

9. Ensemble comprenant un appareil de fixation multifonction (20, 90) selon la revendication 1 et un élément de fixation (42) disposé sur une enveloppe d'un dispositif électronique, l'élément de fixation (42) étant pourvu d'au moins une structure de goulotte (402, 403).

10. Ensemble selon la revendication 9, dans lequel l'élément de liaison flexible suspendu (201, 202, 901, 902) est une plaque de verrouillage incurvée disposée sur la surface de l'appareil de fixation multifonctionnel (20, 90), et la plaque de verrouillage incurvée est insérée de manière rotative et verrouillée avec la structure de goulotte (402, 403) du dispositif électronique.

11. Ensemble selon la revendication 9, dans lequel l'élément de liaison flexible suspendu (201, 202, 901, 902) est une plaque de verrouillage allongée disposée sur la surface de l'appareil de fixation multifonction (20, 90), et la plaque de verrouillage allongée est insérée de manière coulissante et verrouillée avec la structure de goulotte (402, 403) du dispositif électronique.

12. Ensemble selon la revendication 9, dans lequel la structure de confinement en forme de gorge (208, 92) est pourvue d'un ou plusieurs verrous (204, 905) pour verrouiller le dispositif électronique, et le ou les verrous (204, 905) sont disposés au niveau d'une ou plusieurs parois latérales de la structure de confinement en forme de gorge en U (208, 92).

13. Ensemble selon la revendication 12, dans lequel le dispositif électronique présente un premier côté ayant des gorges de dissipation thermique (401), et l'appareil de fixation multifonction (20, 90) est verrouillé avec la gorge de dissipation thermique (401) via le ou les verrous (204, 905).
